**Europäisches Patentamt**

**European Patent Office**

**Office européen des brevets**

(19)

(11) Veröffentlichungsnummer: **0 237 943 B1**

## (12) EUROPÄISCHE PATENTSCHRIFT

(45) Veröffentlichungstag der Patentschrift: **01.07.92**

(21) Anmeldenummer: **87103522.6**

(22) Anmeldetag: **11.03.87**

(51) Int. Cl.[5]: **C01G 49/06**, C09C 1/24

(54) Verfahren zur Herstellung von nadelförmigem alpha-Eisen-III-Oxid.

(30) Priorität: **14.03.86 DE 3608540**

(43) Veröffentlichungstag der Anmeldung:
**23.09.87 Patentblatt 87/39**

(45) Bekanntmachung des Hinweises auf die
Patenterteilung:
**01.07.92 Patentblatt 92/27**

(84) Benannte Vertragsstaaten:
**DE FR GB NL**

(56) Entgegenhaltungen:
**DE-A- 2 849 173
DE-A- 3 101 833
DE-A- 3 146 982
US-A- 4 464 196**

(73) Patentinhaber: **BASF Aktiengesellschaft
Carl-Bosch-Strasse 38
W-6700 Ludwigshafen(DE)**

(72) Erfinder: **Arndt, Volker, Dr.
Koenigsberger Strasse 1
W-6712 Bobenheim-Roxheim(DE)**
Erfinder: **Meyer, Bernd, Dr.
Weschnitzaeckerstrasse 8
W-6942 Moerlenbach(DE)**
Erfinder: **Feser, Rainer, Dr.
Colgensteiner Weg 25
W-6718 Gruenstadt(DE)**
Erfinder: **Steck, Werner, Dr.
Auerstrasse 4
W-6700 Ludwigshafen(DE)**
Erfinder: **Jakusch, Helmut, Dr.
Lorscher Ring 6 c
W-6710 Frankenthal(DE)**

EP 0 237 943 B1

**Beschreibung**

Die Erfindung betrifft ein Verfahren zur Herstellung von dendriten- und porenfreiem $\alpha$-$Fe_2O_3$ aus Eisen-(III)-Salzen in Gegenwart von mit Eisen(III)-Ionen komplexbildenden Substanzen in alkalischer Suspension bei Temperaturen kleiner oder gleich 100°C sowie dessen Verwendung zur Herstellung von für magnetische Aufzeichnungsträger geeigneten magnetischen Materialien.

Um die für moderne magnetische Aufzeichnungsträger geforderten hohen Ansprüche an die verwendeten magnetischen Teilchen zu erfüllen, wurden in der letzten Zeit Anstrengungen unternommen, die kristallographischen Eigenschaften dieser Teilchen zu verbessern. Unerwünscht sind speziell feine Löcher, Poren und Hohlräume, da hierdurch die magnetischen Eigenschaften verschlechtert werden sowie besonders auch die Bildung von Dendriten, da sie das erforderliche gleichmäßige Ausrichten der Teilchen auf dem Aufzeichnungsmedium erschweren oder verhindern und die Packungsdichte erniedrigen.

Als Ausgangsmaterial zur Darstellung von nadelförmigen, magnetischen Teilchen wird im allgemeinen nadelförmiges $\alpha$-$Fe_2O_3$ verwendet. Dieses wird üblicherweise durch Entwässerung von nadelförmigem $\alpha$-FeOOH oder $\gamma$-FeOOH erhalten. Bei diesem Prozeß kommt es zur Ausbildung der oben beschriebenen Nachteile wie Poren, Löcher und Dendriten.

Ein Verfahren zur Darstellung von verbessertem $\alpha$-$Fe_2O_3$ weitgehend ohne die angegebenen Nachteile wird in der DE-A-28 49 173 und DE-A-31 46 982 vorgeschlagen. Insbesondere gemäß der DE-A-31 46 982 wird ein Produkt erhalten, das die Anforderungen an die für moderne Aufzeichnungsträger geeignete Magnetpigmente nahezu erfüllt. Danach wird die Synthese von nadelförmigem $\alpha$-$Fe_2O_3$ direkt aus $Fe(OH)_3$ in alkalischer Suspension bei über 100°C in Gegenwart von Wachstumsregulierungsmitteln und $\alpha$-$Fe_2O_3$-Kristallkeimen durchgeführt. Der Nachteil dieses Verfahrens besteht insbesondere darin, daß Temperaturen von über 100°C in wäßrigen Suspensionen die Verwendung von Druckreaktoren notwendig machen. Solche Reaktoren erfordern einen hohen technischen Aufwand sowohl bei Konstruktion, Betrieb und Überwachung. Ebenso ist ein solches Verfahren energie- und damit kostenintensiv. Eine Abänderung dieses Verfahrens zu niedrigeren Temperaturen, wodurch diese Nachteile behoben werden könnten, ist wenig aussichtsreich, da sowohl in der genannten Literatur als auch von Schwertmann et al., Trans.Intern.Congr. Soil Sci., 9th, Adelaide 1968, 645-655 festgestellt wurde, daß es dann zur Ausbildung von unerwünschten Dendriten am $\alpha$-$Fe_2O_3$ und zu Poren und Versinterungen durch $\alpha$-FeOOH-Beimengungen kommt.

Es bestand deshalb ein großes Interesse an einem Verfahren, nach dem die nadelförmigen $\alpha$-$Fe_2O_3$-Teilchen mit den in DE-A-31 46 982 beschriebenen an sich vorteilhaften Eigenschaften bei Reaktionstemperaturen auch unter 100°C zu erhalten sind. Die Aufgabe dieser Erfindung ist es daher, nadelförmige, dendritenfreie $\alpha$-$Fe_2O_3$-Teilchen mit einer direkten Synthese unter 100°C und damit ohne die oben beschriebenen Nachteile zur Verfügung zu stellen.

Es wurde nun gefunden, daß sich diese Aufgabe mit einem Verfahren zur Herstellung von nadelförmigem $\alpha$-$Fe_2O_3$ durch Erhitzen einer alkalischen, wäßrigen Suspension von Eisen(III)hydroxid in Gegenwart mindestens einer mit Eisen(III)ionen komplexbildenden organischen Verbindung lösen läßt, wenn die Reaktionstemperatur in einer ersten Stufe innerhalb von 0,5 bis 2 Stunden auf 70 bis 90°C und anschließend in einer zweiten Stufe innerhalb von 20 bis 60 Stunden auf 90 bis 100°C eingestellt wird.

Weiterhin wurde gefunden, daß sich die Neigung der $\alpha$-$Fe_2O_3$-Teilchen zur Bildung von Dendriten bei Synthesen unterhalb von 100°C dadurch stark verringern und sogar weitgehend unterdrücken läßt, wenn das zur Synthese eingesetzte Eisen(III)hydroxid einer zur Bildung erster $\alpha$-$Fe_2O_3$-Keime führenden Wärme- und Hydrolyse-Behandlung unterzogen wird. Diese wird so durchgeführt, daß das Eisen(III)hydroxid in wäßriger Suspension unter Rühren erhitzt sowie ein- oder insbesondere mehrmals filtriert und resuspendiert wird. Hierbei ist der insgesamt zugeführte Energiegehalt, der sich aus Dauer und Temperatur zusammensetzt, für eine ausreichende Bildung vorteilhafter Keime entscheidend. So kann ebenso längere Zeit bei höherer Temperatur gerührt und anschließend mit kaltem Wasser resuspendiert sowie kürzere Zeit bei höherer Temperatur gerührt und dafür bei ebenfalls höherer Temperatur resuspendiert werden. Weiterhin sind kürzeres Rühren bei höherer Temperatur und längeres Rühren bei niedriger Temperatur äquivalent.

Als vorteilhafte Temperatur hierfür hat sich ein Bereich von 15 bis 60°C bewährt. Bei der praktischen Durchführung läßt sich dieser Schritt mit der Darstellung des Eisen(III)hydroxid-Niederschlags kombinieren, d.h., man fällt das Eisen(III)hydroxid und rührt direkt die anfallende Suspension bei höherer Temperatur nach. Das ein- oder mehrmalige Resuspendieren ersetzt dann den normalerweise notwendigen Waschvorgang.

Besonders vorteilhaft ist die Kombination beider beschriebenen Verfahrensschritte, da sich durch Einsatz der behandelten Fällung mit verringerter Neigung zur Dendritenbildung die Synthesetemperatur schneller steigern läßt bzw. durch Anwenden des beschriebenen Temperaturprofils bei Synthesen mit behandelter Fällung die letzte Neigung zur Dendritenbildung unterdrücken läßt. Dies führt zu erhöhter Wirtschaftlichkeit des Verfahrens.

Bei der Durchführung des erfindungsgemäßen Verfahrens wird zuvor das Eisen(III)-Salz aus wäßriger Lösung als Eisen(III)hydroxid ausgefällt. Als besonders vorteilhaft haben sich hierbei pH-Werte von 7,5 bis 8,0 und Temperaturen um 60°C herausgestellt. Die Suspension wird dann bei erhöhter Temperatur nachgerührt. Als vorteilhaft hat sich dabei ein Nachrühren bei 60°C während 3 bis 5 Stunden herausgestellt. Die Suspension wird filtriert und ein- oder mehrmals resuspendiert. Dies erfolgt in kaltem Wasser. Bei Verwendung von warmem Wasser wird die Nachrührzeit entsprechend gekürzt. Das so erhaltene Eisen(III)-hydroxid wird in Wasser resuspendiert, mit dem oder den Komplexbildnern versehen und ein pH-Wert zwischen 8,5 und 12 eingestellt. Die Eisenkonzentration bewegt sich im üblichen Umfang. Sie ist nach unten durch den praktischen Nutzen und nach oben durch die Rührfähigkeit der Suspension begrenzt und wird zweckmäßigerweise auf 0,7 bis 1,4 Mol/l eingestellt. Der pH-Wert beträgt 8,5 bis 12, besonders bevorzugt ist ein Wert zwischen 10,5 und 11,5. Als die Kristallform beeinflussende Komplexbildner werden mit Eisen(III)-Ionen Chelatkomplexe bildende organische Substanzen verwendet. Hierfür eignen sich insbesondere $\alpha$-Hydroxycarbonsäuren und organische Phosphonsäuren. Innerhalb dieser Gruppen haben sich Citronensäure, Weinsäure und 1-Hydroxyethan-1,1-diphosphonsäure bewährt. Ihre Konzentration richtet sich nach der Eisenkonzentration, dem pH-Wert und der erwünschten Endproduktgeometrie. Bevorzugter Bereich ist eine Gesamtkonzentration von $10^{-3}$ bis $10^{-2}$ Mol/l.

Im Rahmen des erfindungsgemäßen Verfahrens kann es zweckmäßig sein, die so erhaltene Suspension noch zusätzlich mit $\alpha$-$Fe_2O_3$-Keimen zu versetzen, da diese auch unterhalb von 100°C die Teilchengrößenverteilung günstig beeinflussen. Als Keime werden zuvor hergestellte und ausgesuchte feinteilige Reaktionsprodukte eingesetzt.

Die Suspension wird nun innerhalb von 0,5 bis 2 Stunden auf 70 bis 90°C und anschließend innerhalb von 20 bis 60 Stunden auf 90 bis 100°C erhitzt. Bei dieser Temperatur wird bis zur vollständigen Reaktion nachgerührt, was im allgemeinen innerhalb von 10 bis 50 Stunden der Fall ist, wobei eine Gesamtzeit von 70 Stunden im allgemeinen ausreicht.

Nach beendeter Synthese wird das nadelförmige, dendritenfreie $\alpha$-$Fe_2O_3$ filtriert, gewaschen und getrocknet. Es kann vor der weiteren Verarbeitung in an sich bekannter Weise mit einem formstabilisierenden Überzug versehen werden. Anschließend wird es in an sich bekannter Weise in einer reduzierenden Atmosphäre, z.B. in Wasserstoff und/oder mittels organischer Substanzen, die sich in Gegenwart von Eisenoxiden zersetzen, zu Magnetit reduziert, wobei in allen Fällen die gleichzeitige Anwesenheit von Wasserdampf zur Vermeidung einer Reduktion zu metallischen Phasen zweckmäßig ist. Je nach Reduktionsmittel und Dauer, die zwischen 20 Minuten und 3 Stunden liegen kann, erwiesen sich Reduktionstemperaturen zwischen 300 und 500°C als geeignet.

Der als Zwischenstufe erhaltene Magnetit läßt sich in an sich bekannter Weise mit oxidierenden Gasen, wie z.B. Sauerstoff oder Luft, bei Temperaturen zwischen 250 und 350°C oxidieren. Abhängig von der jeweiligen Oxidationstemperatur haben sich Zeiten von 10 Minuten bis 1 Stunde als zweckmäßig erwiesen. Dabei sind die Oxidationsbedingungen so zu wählen, daß die bekannte irreversible Umwandlung von $\gamma$-$Fe_2O_3$ zu $\alpha$-$Fe_2O_3$ vermieden wird.

Die so erhaltenen Magnetpigmente können je nach Anwendungszweck in bekannter Weise zur Erhöhung der Koerzitivfeldstärke an der Oberfläche mit Kobalt- oder Kobalt/Eisen(II)-Ionen modifiziert werden.

Ebenso ist es möglich, die gegebenenfalls formstabilisierten oder in bekannter Weise modifizierten Ausgangspigmente durch Erhöhung des Reduktionspotentials über die Stufe des Magnetits hinaus zu reduzieren und die so erhaltenen Metallpigmente nach geeigneter Passivierung mittels organischer Lösungsmittel wie zum Beispiel THF oder durch vorsichtiges Überleiten von Luft direkt als Magnetpigment zu verwenden.

Wesentlicher Verwendungszweck der aus den erfindungsgemäß hergestellten $\alpha$-$Fe_2O_3$-Pigmenten gewonnenen Magnetpigmente stellt der Einsatz als magnetisches Material bei der Herstellung von magnetischen Aufzeichnungsträgern dar.

Die Herstellung der Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Vinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele erläutert. Die angegebenen Prozentgehalte beziehen sich als Gew.% auf die Gesamtverbindung. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, Hc,

3

gemessen in [kA/m], wurden bei den Pulvermessungen auf eine Stopfdichte von $\rho = 1,2 g/cm^3$ bezogen. Spezifische Remanenz [Mr/$\rho$] und Sättigung [Mm/$\rho$] sind jeweils in [nTm$^3$/g] angegeben. Die Sättigung bzw. Remanenz von Bändern werden in [mT] angegeben. Die Geometrie der Produkte wurde aus elektronenmikroskopischen Aufnahmen bei einer Vergrößerung von 1:20000 entnommen. Hierbei bezeichnet Nadel eine längliche Form und nicht die Ausbildung spitzer Enden, also auch Rechtecke usw. Die Bestimmung der spezifischen Oberfläche (SN$_2$) geschieht nach DIN 66 132 mittels eines Ströhlein-Areameters (Firma Ströhlein, Düsseldorf, BRD) nach dem Einpunkt-Differenz-Verfahren nach Haul und Dümbgen.

Beispiel 1

10 Mol Fe(NO$_3$)$_3 \cdot$9H$_2$O wurden bei 60°C in 30 l Wasser gelöst und unter Rühren mit 25 %iger Natronlauge versetzt, bis ein pH-Wert von 7,5 erreicht war. Die so erhaltene Suspension von Eisen(III)-hydroxid (im folgenden "Fe(OH)$_3$") wurde 30 Minuten nachgerührt und über eine Nutsche filtriert. Der Filterkuchen wurde portionsweise mit heißem Wasser gut gewaschen. Der so erhaltene Niederschlag dient als Einsatzstoff für die folgenden Beispiele.

Beispiel 1.1

In 0,8 l Wasser wurden in einem mit Kunststoff ausgekleideten Glasgefäß so viel wie in Beispiel 1 gewonnener Niederschlag suspendiert, daß sich eine "Eisenkonzentration" von 1.35 Mol/l Fe(OH)$_3$ ergab. Die Suspension wurde mit 5,10 mMol/l Citronensäure und 0,87 mMol/l Weinsäure versetzt und ein pH-Wert von 11,7 eingestellt. Die fertige Reaktionsmischung wurde unter Rühren innerhalb einer Stunde auf 70°C und anschließend innerhalb von 60 Stunden auf 100°C erhitzt. Es wurde 20 Stunden bei 100°C nachgerührt. Nach Abkühlen, Filtrieren, Waschen und Trocknen wurde röntgenreines, porenfreies und nadelförmiges $\alpha$-Fe$_2$O$_3$ mit einer durchschnittlichen Länge von 0,45 $\mu$m und einer spezifischen Oberfläche (SN$_2$) von 15,1 m$^2$/g erhalten.

Beispiele 1.2 bis 1.11

Es wurden weitere Umsetzungen wie in Beispiel 1.1 jedoch mit veränderten Einwaagen durchgeführt. Zusätzlich wurden teilweise $\alpha$-Fe$_2$O$_3$-Keime zugesetzt. Die Versuche sind in Tabelle 1 aufgeführt. Es entsteht jeweils röntgenreines, porenfreies und nadelförmiges $\alpha$-Fe$_2$O$_3$.

## Tabelle 1

| Beispiel | Eisen-konz. [Mol/l] | pH | Komplex-bildner* [mMol/l] | Keim-menge [mMol/l] | $SN_2$ [m²/g] | λ [μm] |
|---|---|---|---|---|---|---|
| 1.2 | 1.35 | 10.2 | 0.87 We 2.50 Ci | 0 | 13.6 | 0.18 |
| 1.3 | 1.35 | 10.5 | 0.50 We 2.40 Ci | 0 | 10.8 | 0.37 |
| 1.4 | 1.35 | 11.7 | 0.87 We 5.10 Ci | 4 | 14.8 | 0.45 |
| 1.5 | 1.35 | 12.0 | 5.00 Ph | 0 | 12.4 | 0.40 |
| 1.6 | 1.35 | 10.0 | 3.50 Ph | 14 | 14.9 | 0.40 |
| 1.7 | 1.35 | 10.8 | 0.90 We 4.60 Ph | 4 | 14.8 | 0.46 |
| 1.8 | 1.35 | 10.8 | 1.40 We 3.80 Ph | 4 | 15.2 | 0.62 |
| 1.9 | 1.35 | 11.3 | 0.87 We 3.00 Ci | 4 | 16.0 | 0.24 |
| 1.10 | 1.35 | 10.8 | 0.87 We 2.50 Ci | 4 | 15.9 | 0.25 |
| 1.11 | 0.75 | 10.8 | 1.00 We 1.00 Ci 2.50 Ph | 0 | 15.3 | 0.60 |

* Im folgenden werden folgende Abkürzungen verwendet:

We = Weinsäure, Ci = Citronensäure, Ph = 1-Hydroxyethan-1,1-diphosphon-säure.

Beispiel 1.12

Ein wie in Beispiel 1 erhaltener Niederschlag wurde in 0,8 l Wasser suspendiert, so daß sich eine Eisenkonzentration von 1.35 Mol/l ergab. Die Suspension wurde mit 3,00 mMol/l Citronensäure und 0,87 mMol/l Weinsäure versetzt und der pH-Wert auf 11.3 eingestellt. Zusätzlich waren 4 mMol/l $\alpha$-$Fe_2O_3$-Keime vorhanden. Das Reaktionsgemisch wurde unter Rühren innerhalb von 2 Stunden auf 80°C und anschließend innerhalb von 20 Stunden auf 100°C erhitzt. Es wurde 50 Stunden bei 100°C nachgerührt und nach Abkühlen filtriert und getrocknet. Es wurde röntgenreines, porenfreies und nadelförmiges $\alpha$-$Fe_2O_3$ mit einer durchschnittlichen Länge von 0,32 μm und einer spezifischen Oberfläche ($SN_2$) von 9,7 m²/g erhalten.

Beispiel 1.13

Ein wie in Beispiel 1 erhaltener Niederschlag wurde in 0,8 l Wasser suspendiert, so daß sich eine Eisenkonzentration von 1.35 Mol/l ergab. Die Suspension wurde mit 2,80 mMol/l Citronensäure und 0,87 mMol/l Weinsäure versetzt und der pH-Wert auf 11.3 eingestellt. Zusätzlich waren 4 mMol/l $\alpha$-$Fe_2O_3$-Keime vorhanden. Das Reaktionsgemisch wurde unter Rühren innerhalb von 2 Stunden auf 90°C und anschließend innerhalb von 50 Stunden auf 100°C erhitzt. Es wurde 20 Stunden bei 100°C nachgerührt und nach Abkühlen filtriert und getrocknet. Es wurde röntgenreines, porenfreies und nadelförmiges $\alpha$-$Fe_2O_3$ mit einer durchschnittlichen Länge von 0,35 μm und einer spezifischen Oberfläche ($SN_2$) von 16,0 m²/g erhalten.

Beispiel 1.14

Ein wie in Beispiel 1 erhaltener Niederschlag wurde in 0,8 l Wasser suspendiert, so daß sich eine Eisenkonzentration von 1.35 Mol/l ergab. Die Suspension wurde mit 4,80 mMol/l Citronensäure und 0,87 mMol/l Weinsäure versetzt und der pH-Wert auf 11.7 eingestellt. Das Reaktionsgemisch wurde unter Rühren innerhalb von 2 Stunden auf 90°C und anschließend innerhalb von 50 Stunden auf 100°C erhitzt. Es wurde 20 Stunden bei 100°C nachgerührt und nach Abkühlen filtriert und getrocknet. Es wurde röntgenreines, porenfreies und nadelförmiges $\alpha$-$Fe_2O_3$ mit einer durchschnittlichen Länge von 0,39 $\mu$m und einer spezifischen Oberfläche ($SN_2$) von 14,6 $m^2$/g erhalten.

Beispiel 2

5 Mol $Fe(NO_3)_3 \cdot 9H_2O$ wurden in 15 l Wasser gelöst und bei 60°C unter Rühren mit 10 %iger Natronlauge versetzt bis der pH-Wert 8.0 betrug. Die so erhaltene $Fe(OH)_3$-Suspension wurde X Stunden (siehe Tabelle 2) bei 60°C nachgerührt und über eine Filterpresse filtriert. Der Niederschlag wurde viermal in kaltem Wasser resuspendiert und filtriert. Die so erhaltenen Niederschläge wurden für die folgenden Synthesen verwendet.

Beispiele 2.1 bis 2.7

Es wurden Umsetzungen wie in Beispiel 1.1 jedoch mit veränderten Einwaagen durchgeführt. Zusätzlich wurden 4 mMol/l $\alpha$-$Fe_2O_3$-Keime zugesetzt. Die Versuche sind in Tabelle 2 aufgeführt. Es wurde jeweils röntgenreines, porenfreies und nadelförmiges $\alpha$-$Fe_2O_3$ erhalten.

## Tabelle 2

| Beispiel | X [h] | Eisen-konz. [Mol/l] | pH | Komplex-bildner* [mMol/l] | | $SN_2$ [$m^2$/g] | $\mathbf{l}$ [$\mu$m] |
|---|---|---|---|---|---|---|---|
| 2.1 | 7 | 1.35 | 10.8 | 0.87 | We | 18.3 | 0.21 |
| | | | | 2.55 | Ci | | |
| 2.2 | 5 | 1.35 | 11.3 | 0.87 | We | 17.4 | 0.25 |
| | | | | 3.00 | Ci | | |
| 2.3 | 5 | 1.35 | 10.8 | 0.87 | We | 15.6 | 0.27 |
| | | | | 2.50 | Ci | | |
| 2.4 | 5 | 0.75 | 10.8 | 3.30 | Ph | 20.7 | 0.30 |
| 2.5 | 5 | 0.75 | 10.8 | 3.10 | Ph | 21.1 | 0.22 |
| 2.6 | 4 | 1.35 | 10.8 | 0.80 | We | 17.1 | 0.45 |
| | | | | 4.00 | Ph | | |
| | | | | 2.00 | Ci | | |
| 2.7 | 4 | 1.35 | 10.8 | 1.40 | We | 16.8 | 0.39 |
| | | | | 4.00 | Ph | | |

Beispiel 2.8

Ein wie in Beispiel 2 erhaltener Niederschlag, 7 Stunden bei 60°C nachgerührt, wurde in 0,8 l Wasser suspendiert, so daß sich eine Eisenkonzentration von 0.75 Mol/l ergab. Die Suspension wurde mit 3,10 mMol/l 1-Hydroxyethan-1,1-diphosphonsäure versetzt und der pH-Wert auf 10.8 eingestellt. Zusätzlich waren 4 mMol/l $\alpha$-$Fe_2O_3$-Keime vorhanden. Das Reaktionsgemisch wurde unter Rühren innerhalb von 1 Stunde auf 70°C und anschließend innerhalb von 20 Stunden auf 100°C erhitzt. Es wurde 50 Stunden bei 100°C nachgerührt und nach Abkühlen filtriert und getrocknet. Es wurde röntgenreines, porenfreies und

nadelförmiges $\alpha$-Fe$_2$O$_3$ mit einer durchschnittlichen Länge von 0,25 $\mu$m und einer spezifischen Oberfläche (SN$_2$) von 11,2 m$^2$/g erhalten.

Beispiel 2.9

Ein wie in Beispiel 2 erhaltener Niederschlag, 4 Stunden bei 60°C nachgerührt, wurde in 0,8 l Wasser suspendiert, so daß sich eine Eisenkonzentration von 1.35 Mol/l ergab. Die Suspension wurde mit 3,00 mMol/l Citronensäure und 0,87 mMol/l Weinsäure versetzt und der pH-Wert auf 11.3 eingestellt. Zusätzlich waren 4 mMol/l $\alpha$-Fe$_2$O$_3$-Keime vorhanden. Das Reaktionsgemisch wurde unter Rühren innerhalb von 2 Stunden auf 90°C und anschließend innerhalb von 20 Stunden auf 100°C erhitzt. Es wurde 50 Stunden bei 100°C nachgerührt und nach Abkühlen filtriert und getrocknet. Es wurde röntgenreines, porenfreies und nadelförmiges $\alpha$-Fe$_2$O$_3$ mit einer durchschnittlichen Länge von 0,19 $\mu$m und einer spezifischen Oberfläche (SN$_2$) von 11,7 m$^2$/g erhalten.

Beispiel 3

5 Mol Fe(NO$_3$)$_3$·9H$_2$O wurden in 15 l Wasser gelöst und bei 60°C unter Rühren mit 10 %iger Natronlauge versetzt bis der pH-Wert 8.0 betrug. Die so erhaltene Fe(OH)$_3$-Suspension wurde 0,5 Stunden bei 60°C nachgerührt und über eine Filterpresse filtriert. Der Niederschlag wurde viermal in heißem Wasser resuspendiert und filtriert. Mit diesem Niederschlag wurde eine Synthese mit 1.35 Mol/l Eisengehalt durchgeführt. Es wurden 5.00 mMol/l 1-Hydroxyethan-1,1-diphoshonsäure zugesetzt und der pH-Wert auf 11.3 eingestellt. Zusätzlich waren 14 mMol $\alpha$-Fe$_2$O$_3$-Keime vorhanden. Die Reaktionsmischung wurde unter Rühren innerhalb einer Stunde auf 70°C und anschließend innerhalb von 60 Stunden auf 100°C erhitzt. Es wurde 20 Stunden bei 100°C nachgerührt. Nach Abkühlen, Filtrieren, Waschen und Trocknen wurde röntgenreines, porenfreies und nadelförmiges $\alpha$-Fe$_2$O$_3$ mit einer durchschnittlichen Länge von 0,53 $\mu$m und einer spezifischen Oberfläche SN$_2$) von 14.8 m$^2$/g erhalten.

Beispiel 4.1

Das Produkt aus Beispiel 1.4 wurde durch Erhitzen in verdünnter Phosphorsäure mit einem Überzug von 0,5 % Phosphat versehen, filtriert, getrocknet und anschließend mit 2,5 % Stearinsäure versetzt und in einem Drehrohrofen 30 Minuten bei 450°C in einem Wasserstoff/Stickstoff-Strom (1:1) zu Magnetit reduziert. Vor dem Eintritt in das Reduktionsrohr wurde der H$_2$-Strom durch Wasser mit einer Temperatur von 60°C bis 80°C hindurchgeleitet. Nach beendeter Reduktion wurde die Magnetitprobe in einem Ofen gleicher Bauart 30 Minuten bei 280°C mit Luft zu $\gamma$-Fe$_2$O$_3$ oxidiert. Das fertige Produkt hatte eine Koerzitivfeldstärke von 22.6 kA/m und eine spezifische Remanenz von 39.9 nTm$^3$/g.

Beispiel 4.2

Das Produkt aus Beispiel 1.1 wurde durch Erhitzen in verdünnter Phosphorsäure mit einem Überzug von 0,5 % Phosphat versehen, filtriert, getrocknet und wie in Beispiel 4.1 umgewandelt. Das $\gamma$-Fe$_2$O$_3$ wurde in Kobalt-Ionen enthaltendem Wasser suspendiert und durch Fällen mit Natronlauge und vierstündiges Rühren bei 95°C an der Oberfläche mit 1,2 % Co modifiziert. Das fertige Magnetpigment hatte eine Koerzitivfeldstärke von 27.1 kA/m und eine spezifische Remanenz von 39.4 nTm$^3$/g.

Beispiel 4.3

Das Produkt aus Beispiel 1.14 wurde wie in Beispiel 4.1, jedoch bei einer Reduktionstemperatur von 430°C, umgewandelt. Das fertige Produkt hatte eine Koerzitivfeldstärke von 23.6 kA/m und eine spezifische Remanenz von 43.7 nTm$^3$/g.

Beispiel 4.4

Das Produkt aus Beispiel 1.13 wurde wie in Beispiel 4.1, jedoch bei einer Reduktionstemperatur von 400°C, umgewandelt. Das $\gamma$-Fe$_2$O$_3$ wurde in Kobalt-Ionen enthaltendem Wasser suspendiert und durch Fällen mit Natronlauge und vierstündiges Rühren bei 95°C an der Oberfläche mit 0,6 % Co modifiziert, filtriert, getrocknet und 1 Stunde bei 220°C unter Stickstoff getempert. Das fertige Magnetpigment hatte eine Koerzitivfeldstärke von 26.8 kA/m und eine spezifische Remanenz von 43.4 nTm$^3$/g.

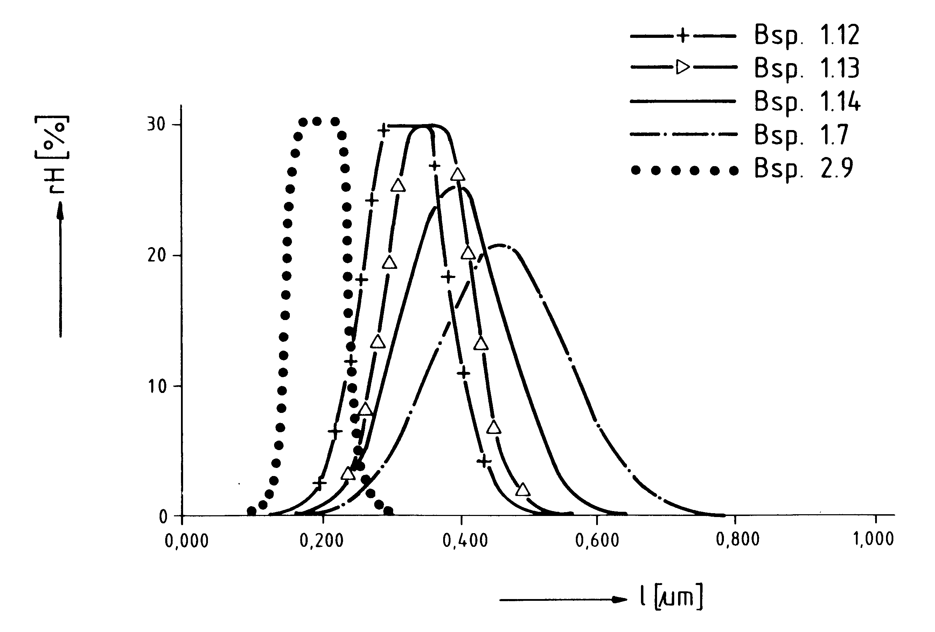

Die Figur zeigt die mit Hilfe des erfindungsgemäßen Verfahrens erreichbare enge Teilchengrößenverteilung der resultierenden $\alpha$-Fe$_2$O$_3$-Proben, d.h. die relative Häufigkeit (rH) angegeben in Prozent in Abhängigkeit von der Teilchenlänge (I) in $\mu$m.

**Patentansprüche**

1. Verfahren zur Herstellung von nadelförmigem $\alpha$-Fe$_2$O$_3$ durch Erhitzen einer alkalischen, wäßrigen Suspension von Eisen(III)hydroxid in Gegenwart mindestens einer mit Eisen(III)ionen komplexbildenden organischen Verbindung, dadurch gekennzeichnet, daß die Reaktionstemperatur in einer ersten Stufe innerhalb von 0,5 bis 2 Stunden auf 70 bis 90°C und anschließend in einer zweiten Stufe innerhalb von 20 bis 60 Stunden auf 90 bis 100°C eingestellt wird.

2. Verfahren gemäß Anspruch 1, dadurch gekennzeichnet, daß die Eisen(III)hydroxid-Fällung nach einer ersten Filtration vor dem Erhitzen in Gegenwart mindestens einer mit Eisen(III)ionen-Komplexe bildenden organischen Verbindung bei einer 100°C nicht übersteigenden Temperatur mindestens einmal unter Rühren suspendiert und erneut filtriert wird.

3. Verfahren gemäß Anspruch 2, dadurch gekennzeichnet, daß die Filtration und erneute Suspendierung der Eisen(III)hydroxid-Fällung bei einer Temperatur zwischen 15 und 60°C durchgeführt wird.

4. Verfahren gemäß Anspruch 1 oder 2, dadurch gekennzeichnet, daß der pH-Wert der Suspension 8,5 bis 12 beträgt.

5. Verfahren gemäß Anspruch 1 oder 2, dadurch gekennzeichnet, daß vor dem Erhitzen der alkalischen wäßrigen Suspension des Eisen(III)hydroxids in Gegenwart mindestens einer mit Eisen(III)ionen komplexbildenden organischen Substanz auf eine 100°C nicht übersteigende Temperatur dieser Suspension $\alpha$-Fe$_2$O$_3$-Keime zugesetzt werden.

**Claims**

1. A process for the preparation of acicular $\alpha$-Fe$_2$O$_3$ by heating an alkaline, aqueous suspension of iron-(III) hydroxide in the presence of one or more organic compounds which form a complex with iron(III) ions, wherein the reaction temperature in a first stage is brought to 70-90°C in the course of from 0.5 to 2 hours and then, in a second stage, to 90-100°C in the course of from 20 to 60 hours.

2. A process as claimed in claim 1, wherein, after a first filtration and before being heated in the presence of one or more organic compounds which form complexes with iron(III) ions, the iron(III) hydroxide precipitate is suspended one or more times, while stirring, at a temperature not exceeding 100°C, and the said precipitate is filtered off again.

3. A process as claimed in claim 2, wherein the filtration and resuspension of the iron(III) hydroxide precipitate is carried out at from 15 to 60°C.

4. A process as claimed in claim 1 or 2, wherein the pH of the suspension is from 8.5 to 12.

5. A process as claimed in claim 1 or 2, wherein $\alpha$-Fe$_2$O$_3$ seeds are added to the alkaline aqueous suspension of the iron(III) hydroxide before the suspension is heated, in the presence of one or more organic substances which form complexes of iron(III) ions, at a temperature not exceeding 100°C.

**Revendications**

1. Procédé de préparation d'un alpha-Fe$_2$O$_3$ aciculaire par chauffage d'une suspension aqueuse alcaline d'hydroxyde de fer-III en présence d'au moins un composé organique complexant les ions de fer-III, caractérisé en ce que l'on règle la température de réaction, dans un premier stade opératoire et dans un intervalle de 0,5 à 2 h, à un niveau de 70 à 90 degrés C puis, dans un deuxième stade opératoire, dans un intervalle de 20 à 60 h, à un niveau de 90 à 100 degrés C.

2. Procédé selon la revendication 1, caractérisé en ce que, après une première filtration et avant chauffage en présence d'au moins un composé organique formant des complexes avec les ions de fer-III, on remet le précipité d'hydroxyde de fer-III en suspension, sous agitation, au moins une fois, à une température ne dépassant pas 100 degrés C puis on filtre à nouveau.

3. Procédé selon la revendication 2, caractérisé en ce que la filtration et la nouvelle mise en suspension du précipité d'hydroxyde de fer-III sont exécutées à une température de 15 à 60 degrés C.

4. Procédé selon la revendication 1 ou 2, caractérisé en ce que le pH de la suspension va de 8,5 à 12.

5. Procédé selon la revendication 1 ou 2, caractérisé en ce que, avant le chauffage de la suspension aqueuse alcaline de l'hydroxyde de fer-III en présence d'au moins un composé organique complexant les ions de fer-III à une température ne dépassant pas 100 degrés C, on ajoute des germes d'alpha-$Fe_2O_3$ à cette suspension.

EP 0 237 943 B1